# EUROPÄISCHE PATENTSCHRIFT

(11) **EP 3 541 684 B1**
(45) Veröffentlichungstag und Bekanntmachung des Hinweises auf die Patenterteilung: **22.07.2020**
(21) Anmeldenummer: 17797954.9
(22) Anmeldetag: 15.11.2017
(51) Int. Cl.: B62D 1/20, F16D 3/06, F16C 3/035

(54) **LENKWELLE FÜR EIN KRAFTFAHRZEUG**
STEERING SHAFT FOR A MOTOR VEHICLE
ARBRE DE DIRECTION D'UN VÉHICULE AUTOMOBILE

(30) Priorität: 18.11.2016 DE 102016222795
(43) Veröffentlichungstag der Anmeldung: 25.09.2019
(73) Patentinhaber: thyssenkrupp Presta AG, 9492 Eschen (LI); thyssenkrupp AG, 45143 Essen (DE)
(72) Erfinder: SCHWARZHANS, Paul, 6800 Feldkirch (AT); SCHMIDT, René Marco, 9464 Lienz (CH)
(74) Vertreter: thyssenkrupp Intellectual Property GmbH
(86) Internationale Anmeldenummer: PCT/EP2017/079297
(87) Internationale Veröffentlichungsnummer: WO 2018/091516

(56) Entgegenhaltungen:
- DE-A1- 10 359 962
- DE-A1-102014 017 555

## Beschreibung

### Stand der Technik

Die Erfindung betrifft eine Lenkwelle für ein Kraftfahrzeug, welche eine als Hohlwelle ausgebildete Außenwelle umfasst, in der eine Innenwelle koaxial angeordnet ist, die relativ zur Außenwelle in Richtung der Längsachse der Lenkwelle teleskopierbar und mit der Außenwelle über mindestens einen Wälzkörper drehmomentschlüssig verbunden ist, wobei der Wälzkörper in Richtung der Längsachse abrollbar ist und in Umfangsrichtung bezüglich einer Drehung um die Längsachse formschlüssig zwischen Wälzkörperlaufbahnen an der Innenwelle und an der Außenwelle anliegt, wobei die Lenkwelle weiterhin ein Sicherungselement umfasst, welches mindestens einen Stützkörper aufweist, der zwischen an der Innenwelle und an der Außenwelle ausgebildeten Stützflächen angeordnet und in Umfangsrichtung formschlüssig abstützbar ist.

Teleskopierbare Lenkwellen in Kraftfahrzeugen ermöglichen eine Verstellung der Lenksäule, wobei die Lenkradposition längs in Achsrichtung der Lenkwelle eingestellt werden kann. Außerdem kann die Lenkwelle im Fall eines Crashs zusammengeschoben werden, wodurch wirksam verhindert wird, dass die Lenksäule weiter in das Innere der Fahrgastzelle eindringt und zu Verletzungen der Insassen führt. Dies wird in der Regel durch die Bereitstellung zweier gegeneinander teleskopierbarer Wellen erreicht, nämlich einer Außenwelle, die als Hohlwelle in Form eines rohrförmigen Hohlprofils ausgebildet ist, und einer darin in Richtung der Längsachse der Lenkwelle verschieblich gelagerten Innenwelle. Die Innenwelle und die Außenwelle bilden gemeinsam die Lenkwelle, die durch teleskopierende Relativbewegung entsprechend verkürzt oder verlängert werden kann.

Bei gattungsgemäßen Lenkwellen, die auch als Rollschiebewellen bezeichnet werden, dienen die Wälzkörper, beispielsweise Kugeln, zur Ausbildung einer reibungsarmen Linear-Wälzlagerung, welche eine dauerhaft leichtgängige Verstellung der Innenwelle in der Außenwelle in Richtung der Längsachse zur Einstellung der Lenkradposition in Längsrichtung gewährleistet. Zugleich dienen die Wälzkörper als Formschlusselemente zur Übertragung des zur Lenkung eingebrachten Drehmoments von der Innenwelle auf die Außenwelle. Hierzu sind in Innen- und Außenwelle nutartige, sich radial gegenüberliegende, in Längsrichtung verlaufende Wälzkörperlaufbahnen ausgebildet, in denen die Wälzkörper nur in Längsrichtung abrollen können. Bezüglich einer Drehung um die Längsachse greifen die Wälzkörper formschlüssig in die Wälzkörperlaufbahnen ein. Dadurch wird ein als Drehmoment in die Innenwelle eingegebenes Lenkmoment als Kraft in Umfangsrichtung von der Wälzkörperlaufbahn der Innenwelle über die Rollfläche auf den Wälzkörper, und von diesem über dessen andere Rollfläche auf die Wälzkörperlaufbahn der Außenwelle übertragen. Die Wälzkörper dienen somit als Formschlusselemente, die bezüglich einer Kraftübertragung in Umfangsrichtung formschlüssig zwischen den Rollflächen angeordnet sind. In Längsrichtung rollen die Wälzkörper mit geringer Rollreibung ab, so dass sie nahezu spielfrei zwischen den Wälzkörperlaufbahnen eingesetzt werden können. Das hat den Vorteil, dass ein eingetragenes Lenkmoment praktisch spielfrei übertragen wird, was ein sicheres, präzises und geräuscharmes Lenken ermöglicht.

Um in einem Notfall, wenn die Wälzkörper zur Übertragung des Drehmoments ausfallen, beispielsweise durch Bruch oder Entfernung aus dem Formschluss, weiterhin ein grundlegende Lenkfunktion zu gewährleisten, ist es aus der DE 10 2014 017 555 A1 bekannt, eine Ersatzkupplung zwischen Innen- und Außenwelle bereitzustellen. Diese weist ein Sicherungselement in Form eines Anschlagelements auf, das auf dem freien Ende der Außenwelle festgelegt wird und einen Öffnungsquerschnitt mit in die Wälzkörperlaufbahnen jeweils formschlüssig eingreifenden Stützkörpern aufweist, die unmittelbar auf der Oberfläche der Wälzkörperlaufbahnen entlanggleiten. Durch die dabei unvermeidliche Reibung kann die zur Verstellung in Längsrichtung erforderliche Verstellkraft jedoch in unerwünschter Weise erhöht werden, insbesondere auf lange Sicht, wenn die gleitenden Oberflächen durch abrasive Partikel aufgeraut werden, oder die Wirkung von eingesetzten Schmiermitteln nachlässt.

Aus der EP 3 037 322 A2 und der EP 3 045 378 A2 ist es weiterhin bekannt, stoßabsorbierende Pufferkörper in den Wälzkörperlaufbahnen anzuordnen. Diese bestehen allerdings aus relativ weichen Materialien, und können nur dazu dienen, die Wälzkörper in den Wälzkörperlaufbahnen zu halten und einen Anschlag in Längsrichtung zu dämpfen. Als Notfallsystem zur Übertragung des Lenkmoments beim Ausfall der Wälzkörper sind diese Pufferkörper ungeeignet. Außerdem tritt durch die Pufferkörper ebenfalls Reibung zwischen Innen- und Außenwelle auf.

Aus der DE 10 2014 017555 A1 ist ebenfalls eine Lenkwelle der eingangs genannten Art bekannt, welche die Merkmale des Obergriffs des unabhängigen Anspruchs aufweist.

Angesichts der vorangehend erläuterten Problematik ist es eine Aufgabe der vorliegenden Erfindung, eine verbesserte Lenkwelle anzugeben, welche eine leichtgängige Verstellung und eine erhöhte Sicherheit beim Ausfall von Wälzkörpern bietet.

### Darstellung der Erfindung

Zur Lösung der vorgenannten Problematik wird erfindungsgemäß für eine Lenksäule der eingangs genannten Art vorgeschlagen, dass der Stützkörper in Umfangsrichtung Abstand zu den Stützflächen aufweist.

Erfindungsgemäß ist der Stützkörper mit definiertem Spiel in Umfangsrichtung zwischen den Stützflächen angeordnet, so dass er von der Innenwelle, der Außenwelle, oder von beiden Wellen beabstandet ist, also berührungsfrei in Längsrichtung relativ zur Stützfläche in Längsrichtung bewegt werden kann, und nicht wie im Stand der Technik im Reibkontakt anliegt. Im Normalbetrieb besteht kein durchgehender Kontakt zwischen Stützkörper und Innen- und Außenwelle, und folglich findet keine Kraftübertragung zwischen Innen- und Außenwelle über den Stützkörper statt. Dadurch wird erreicht, dass die Verstellkraft nicht durch Reibung zwischen Stützkörper und Stützflächen in unerwünschter Weise erhöht wird.

Die Sicherungsfunktion wird dadurch gewährleistet, dass erfindungsgemäß ein Stützkörper zwischen den Stützflächen im losen Formschluss angeordnet ist. Solange die im Normalbetrieb zur Drehmomentübertragung dienenden Wälzkörper unbeschädigt in den Wälzkörperlaufbahnen angeordnet sind, kann über die Stützkörper kein Drehmoment auf die dazu beabstandeten Stützflächen übertragen werden. Falls jedoch Wälzkörper beschädigt oder entfernt werden, entfällt der Formschlusseingriff zwischen den Wälzkörperlaufbahnen über die Wälzkörper, und die Innenwelle kann relativ zur Außenwelle gedreht werden. In diesem Fall wird der Stützkörper in Umfangsrichtung bewegt, bis er mit der Stützfläche in Kontakt kommt, d.h. in Umfangsrichtung gegen die Stützfläche anschlägt, so dass er mit der Stützfläche in Eingriff gebracht wird zur Bildung einer in Umfangsrichtung wirkenden Formschlussverbindung, über die ein Drehmoment zwischen Innenwelle und Außenwelle übertragen werden kann. Dadurch wird im Notfall die Lenkfunktion gewährleistet.

Ein Stützkörper wird bevorzugt aus einem Werkstoff gefertigt, welcher geeignet ist, die mechanischen Belastungen aufzunehmen, die auftreten, wenn ein erfindungsgemäßes Sicherungselement zur Drehmomentübertragung im Notfall in Formschlusseingriff gebracht wird. Dabei werden über die Stützflächen hohe Scherbelastungen ausgeübt, welche die Funktion des Stützkörpers nicht gefährden sollen. Bevorzugt wir daher ein metallisches Material verwendet, welches eine hohe Bruch- und Reißfestigkeit hat, beispielweise Stahl.

Es können ein oder mehrere Stützkörper vorgesehen sein, die jeweils zwischen korrespondierenden Stützflächen angebracht sind. Im Normalbetrieb wirken zwischen den Stützkörpern und den dazu beabstandeten Stützflächen keine Kräfte, erst beim Ausfall der Wälzkörper übernehmen die Stützkörper die Funktion als Drehmomentübertragungselemente. Dadurch wird ein redundantes System gebildet, welches erhöhte Sicherheit im Notfallbetrieb bietet, die Funktion im Normalbetrieb jedoch nicht beeinträchtigt.

Das Sicherungselement kann mit der Innenwelle oder der Außenwelle fest verbunden sein. Dabei kann ein Stützkörper an der Innenwelle fixiert sein und hat erfindungsgemäß in Umfangsrichtung Abstand zu einer Stützfläche an der Außenwelle, oder umgekehrt. Der Stützkörper kann zusammen mit der Innen- oder Außenwelle in Achsrichtung linear verschiebbar sein, und nicht wie die Wälzkörper dazwischen abrollen. Die Fixierung des Stützkörpers an der Innen- oder Außenwelle kann unabhängig von der Halterung der Wälzkörper erfolgen, so dass eine unabhängige redundante Funktion im Notfall sichergestellt ist.

Die Erfindung kann dadurch realisiert werden, dass ein Stützkörper zwischen den Wälzkörperlaufbahnen angeordnet ist, wobei die Stützflächen im Bereich der Wälzkörperlaufbahnen ausgebildet sind. Dabei werden die vorhandenen Innenflächen der nutförmigen Wälzkörperlaufbahnen, zwischen denen im Normalbetrieb die Wälzkörper im Wesentlichen spielfrei, also ohne Abstand in Umfangsrichtung angeordnet sind, als Stützfläche für das Sicherungselement genutzt. Dazu ist mindestens ein Stützkörper wie ein Wälzkörper in einer Position in Umfangsrichtung zwischen den Wälzkörperlaufbahnen angeordnet. Im Gegensatz zu einem Wälzkörper liegt ein Stützkörper erfindungsgemäß jedoch nicht gleichzeitig an beiden Wälzkörperlaufbahnen von Innen- und Außenwelle an, sondern hat zumindest zu einer Stützfläche, die im Bereich der der Wälzkörperlaufbahnen angeordnet ist, Abstand in Umfangsrichtung. Dadurch können die vorhandenen Wälzkörperlaufbahnen ohne zusätzlichen Fertigungsaufwand als Stützflächen für das redundante Sicherungssystem genutzt werden. Im Notfall, wenn ein Wälzkörper ausfällt, übernimmt ein Stützkörper dessen Funktion der Drehmomentübertragung zwischen den Wälzkörperlaufbahnen.

Es kann vorgesehen sein, dass ein Stützkörper in Umfangsrichtung gesehen einen kleinere Querschnittsabmessung hat als ein Wälzkörper. Dadurch kann erreicht werden, dass ein neben einem Wälzkörper innerhalb der Wälzkörperlaufbahnen angeordneter Stützkörper nicht wie dieser Wälzkörper an beiden Wälzkörperlaubahnen gleichzeitig anliegt, sondern zumindest zu einer Wälzkörperlaufbahn bzw. einer im Bereich der Wälzkörperlaufbahn ausgebildeten Stützfläche Abstand in Umfangsrichtung hat. Der Abstand kann dadurch realisiert werden, dass der in Umfangsrichtung gemessene Querschnitt eines Stützkörpers zwischen den Abrollflächen eines Wälzkörpers auf zumindest einer der Wälzkörperlaufbahnen, beispielsweise den in Umfangsrichtung gegenüberliegenden Kontaktflächen einer Kugel in der nutförmigen Wälzkörperlaufbahn in der Außenwelle, eine kleinere Abmessung hat als ein Wälzkörper. Dadurch, dass der Querschnitt in Umfangsrichtung in diesem Bereich schmaler ist als der Querschnitt eines Wälzkörpers, hat der Stützkörper anders als der Wälzkörper Spiel zur Wälzkörperlaufbahn, und kann im Normalbetrieb bei intakten Wälzkörpern berührungsfrei in Längsrichtung bewegt werden.

Das Sicherungselement kann ein Trägerteil aufweisen, an dem mindestens ein Stützkörper angebracht ist. Durch das Trägerteil können ein oder mehrere Stützkörper gehaltert und relativ zu den Stützflächen positioniert werden. Beispielsweise kann ein Trägerteil an der Innenwelle oder der Außenwelle fixiert werden, so dass ein Stützkörper erfindungsgemäß an einer Position mit definiertem Abstand zu einer Stützfläche gehalten wird.

Eine vorteilhafte Ausführung der Erfindung sieht vor, dass das Trägerteil sich flächenhaft in einer Querschnittsebene senkrecht zur Längsachse erstreckt, und zumindest ein Stützkörper in Richtung der Längsachse von dem Trägerteil absteht. Besonders effizient kann ein derartiges Trägerteil aus Blech gefertigt werden, beispielsweise als Stanzteil aus Stahlblech. Ein oder mehrere Stützkörper können mittels geeigneter Befestigungsmittel an dem Trägerteil angebracht sein, so dass sie von der Fläche des Trägerteils abstehen. Dabei ist es vorteilhaft, das zumindest zwei Stützkörper bezüglich der Längsachse spiegelsymmetrisch, bevorzugt einander gegenüberliegend angeordnet sind. Die Anordnung der Stützkörper kann bevorzugt mit der Anordnung von Wälzkörperlaufbahnen der Innenwelle oder der Außenwelle korrespondieren. Dadurch ist es möglich, dass an einem Sicherungselement mehrere Stützkörper angebracht werden, die durch Positionierung des Sicherungselements positionsgenau mit erfindungsgemäßem Abstand zu den zugeordneten Stützflächen fixiert werden können. Dadurch wird die Montage vereinfacht.

Das Trägerteil kann beispielsweise als plattenförmiger, flacher Körper ausgebildet sein, der auf der Stirnseite am freien Ende der Innenwelle festgelegt ist. Der oder die Stützkörper können in die stirnseitig offenen Querschnitte der Wälzkörperlaufbahnen eingreifen.

Es kann weiterhin vorgesehen sein, dass zumindest zwei Stützkörper von dem Trägerteil gegeneinander federnd gegen die Innenwelle oder die Außenwelle angedrückt werden. Das Trägerteil kann zu diesem Zweck federelastisch ausgebildet sein, an dem zwei paarweise bezüglich der Längsachse gegenüberliegende Stützkörper gegeneinander federnd angebracht sind. Dadurch kann das Sicherungselement einfach dadurch befestigt werden, dass beispielsweise die Innenwelle zwischen den Stützkörpern eingeklemmt wird, d.h. das Sicherungselement auf die Innenwelle aufgeklemmt wird. Die Stützkörper dienen somit gleichzeitig als Befestigungsmittel zur Fixierung des Sicherungselements auf der Innenwelle. Besonders vorteilhaft ist dabei, dass die Stützkörper federbelastet in Wälzkörperlaufbahnen oder ähnlichen Ausnehmungen der Innenwelle aufgenommen werden.

Alternativ oder zusätzlich ist es denkbar und möglich, dass ein oder mehrere Stützkörper zur Fixierung federnd gegen die Außenwelle angepresst werden. Beispielsweise kann das Sicherungselement in den Öffnungsquerschnitt der Außenwelle eingeklemmt werden, so dass die Stützkörper federnd in die Wälzkörperlaufbahnen angedrückt werden.

Eine Realisierung der Erfindung kann dadurch erfolgen, dass das Sicherungselement als einstückiges Blechformteil ausgebildet ist, wobei zumindest ein Stützkörper als Umbiegung ausgebildet ist. Ein derartiges Blechformteil kann beispielsweise einen langgestreckten, streifenförmigen Blechabschnitt, also einen Blechstreifen umfassen, der sich in einer Ebene quer zur Längsachse erstreckt. Zumindest einer der, bevorzugt beide Endabschnitte des Blechabschnitts sind um quer zur Längsachse und zur Längserstreckung des Blechabschnitts, parallel zu einer Umfangsrichtung liegende Biegeachsen zur selben Seite des Blechabschnitts hin umgebogen. Diese Umbiegungen formen erfindungsgemäße Stützkörper, die einseitig von dem Blechstreifen in Achsrichtung abstehen. Der Blechstreifen bildet dabei ein einstückig mit den Stützkörpern ausgebildetes Trägerteil.

In den Umbiegungen kann der streifenförmige Blechabschnitt so weit umgebogen sein, dass die freien Enden gegen die Längsachse gerichtet sind, oder gegeneinander weisen. Dies kann durch eine Umbiegung zwischen 90° und 270° realisiert werden, wobei eine Umbiegung um 180° bewirkt, dass die freien Enden senkrecht zur Längsachse stehen, und parallel zur Längserstreckung des Blechabschnitts aufeinander zu ausgerichtet sind.

Durch die vorangehend erläuterte Ausführung aus einem Blechstreifen wird ein bügelförmiges Sicherungselement realisiert. Dadurch, dass der Blechstreifen bevorzugt aus Stahlblech oder Federstahlblech gefertigt wird, bildet der die Stützkörper verbindende Blechabschnitt ein biegeelastisch federndes Trägerteil. Die durch Umbiegungen der Endbereiche realisierten Stützkörper sind folglich gegeneinander federnd miteinander verbunden. Dadurch ist es möglich, das Sicherungselement auf einer Innenwelle festzuklemmen, indem das Trägerteil parallel zur freien Stirnseite angeordnet wird, wobei die gegeneinander gerichteten Stützkörper die Innenwelle umgreifen und durch die Elastizität des Blechstreifens federnd zwischen sich einspannen. Dabei werden die freien Enden des Blechstreifens in radialer Richtung, quer zur Längsachse gegen die Innenwelle angedrückt.

Das Sicherungselement kann in der vorangehend beschriebenen Form als Blechstreifen ausgebildet sein mit zwei relativ zur Längsachse paarweise gegenüberliegenden, durch Umbiegungen ausgebildeten Stützkörper, so dass eine bügelartige Anordnung realisiert wird. Dadurch können die Stützkörper in einander gegenüberliegende Wälzkörperlaufbahnen eingreifen. Es ist ebenfalls möglich, das Blechformteil in seiner Grundform mehreckig, kreuz- oder sternförmig auszugestalten, wobei in den Ecken oder den freien Endabschnitte der kreuz- oder sternförmig abstehenden Arme Stützkörper angebracht werden können. Auf diese Weise können beispielsweise vier Stützkörper in einer geometrischen Anordnung realisiert werden, welche der Anordnung von vier Wälzkörperlaufbahnen einer Innenwelle entspricht, so dass die Stützkörper mittels eines Montagevorgangs positionsgenau relativ zu den Wälzkörperlaufbahnen fixiert werden können, beispielsweise durch Festklemmen. Entsprechend können Anordnungen mit anderen Anzahlen von Stützkörpern realisiert werden, die je nach angestrebter Anordnung relativ zu der jeweiligen Welle symmetrisch oder auch unregelmäßig angeordnet sein können.

Zur Befestigung auf der Innenwelle wird das Sicherungselement von außen, d.h. auf dem Außenumfang festgelegt, beispielsweise wie beschrieben zwischen elastisch gehaltenen Stützkörpern federnd eingespannt und dadurch festgeklemmt. Bevorzugt kann die Anbringung von außen innerhalb des offenen Querschnitts der nutförmigen Wälzkörperlaufbahnen erfolgen. Eine Befestigung in der Außenwelle ist ebenfalls möglich, wobei die Stützkörper entsprechend federnd nach außen abgespreizt werden, so dass sie von innen gegen die Innenwandung der Außenwelle angedrückt werden, bevorzugt innerhalb der Wälzkörperlaufbahnen.

Die Befestigung des Sicherungselements durch Festklemmen an der Innen- oder Außenwelle kann dadurch verbessert werden, dass mindestens ein Stützkörper ein Fixiermittel aufweist, welches an der Innenwelle oder der Außenwelle festlegbar ist. Ein Fixiermittel kann beispielsweise eine reibungserhöhende Ausgestaltung oder Beschichtung der Oberfläche umfassen, welche bei einem federnd aufgeklemmten Stützkörper gegen die Oberfläche der Innen- oder Außenwelle angedrückt wird und für eine reibschlüssige Fixierung des Stützkörpers sorgt. Es ist ebenfalls möglich, den gegen die Oberfläche anliegenden Bereich des Stützkörpers mit einem krallen-, klingen- oder dornartigen Fixiermittel auszugestalten, welches sich beim Festklemmen in die Oberfläche von Innen- oder Außenwelle eingräbt und eine form- und reibschlüssige Fixierung des Stützkörpers sorgt, insbesondere in Richtung der Längsachse. Alternativ kann die Befestigung des Sicherungselements mittels einer Schraube erfolgen, die in eine Gewindebohrung, die in der Stirnseite der Innenwelle ausgebildet ist, eingeschraubt ist. Die Schraube erstreckt sich durch eine Bohrung im Trägerteil des Sicherungselements.

Die Stützkörper können wie oben beschrieben durch Umbiegungen einstückig aus einem Blechformteil aus Stahl oder Federstahl erzeugt werden. Alternativ können auch Stützkörper, die gegebenenfalls aus anderen Materialien bestehen, an einem Trägerteil angebracht sein. Das Trägerteil kann als Blechformteil ausgebildet sein, oder auch als Press- oder Biegeteil aus metallischen oder nichtmetallischen Werkstoffen. Eine Ausbildung als Kunststoffteil, bevorzugt als Kunststoff-Spritzgussteil ist ebenfalls denkbar und möglich. Die Befestigung des oder der Stützkörper an dem Trägerteil kann wie beschrieben durch einstückige Herstellung, oder auch durch Stoff-, form- oder/und kraftschlüssige Verbindungen erfolgen.

Alternativ kann die Erfindung dadurch verwirklicht werden, dass das Trägerteil sich in Richtung der Längsachse erstreckt und der Stützkörper an einem von dem Trägerteil U-förmig umgebogenen Abschnitt ausgebildet wird, wobei ein freies Ende der Außenwelle zwischen dem Trägerteil und dem Stützkörper aufgenommen wird. In dieser Ausführung wird von dem Trägerteil und dem U-förmigen, im Wesentlichen um 180° zurückgebogenen Abschnitt ein Halteschlitz begrenzt. Mit der Öffnung des Halteschlitzes kann das Trägerteil klammerartig auf die Wandung im stirnseitigen Bereich der Öffnung der Außenwelle aufgesteckt werden, so dass das Trägerteil sich außen auf der Außenwelle erstreckt, und der umgebogene Abschnitt in den Öffnungsquerschnitt der Außenwelle eintaucht. An diesem in die Außenwelle eintauchenden Abschnitt ist ein Stützkörper angebracht, beispielsweise auch in Form einer Umbiegung eines Blechformteils. Der Stützkörper kann auf diese Weise beispielsweise innerhalb des offenen Querschnitts einer Wälzkörperlaufbahn gehalten werden. Es ist ebenfalls möglich, dass die Innenwelle einen Mehrkant-Querschnitt hat, beispielsweise als Vierkant-Profil gestaltet ist. Der oder die Stützkörper haben im Normalbetrieb erfindungsgemäß Abstand zu den Seitenflächen des Mehrkant-Profils. Bei einer Relativdrehung des Mehrkant-Profils innerhalb der Außenwelle, die nur beim Ausfallen der Wälzkörper auftreten kann, schlagen die Kantenbereiche an den oder die Stützkörper an, so dass eine Drehmomentübertragung im Notfall gewährleistet ist.

Es ist ebenfalls denkbar und möglich, dass der zumindest ein, bevorzugt mehrere Wälzkörper abrollbar in einem Käfig gehaltert sind, der relativ zur Innenwelle und zur Außenwelle in Richtung der Längsachse bewegbar ist, wobei ein Stützkörper an dem Käfig angebracht ist. Der Käfig dient dazu, in der Regel eine Mehrzahl von Wälzkörpern lose drehbar aufzunehmen und in Abrollrichtung, d.h. in Längsrichtung relativ zueinander zu positionieren. Der Käfig bewegt sich folglich in Längsrichtung zusammen mit den abrollenden Wälzkörpern relativ zu Innen- und Außenwelle. Ein erfindungsgemäßes Stützkörper kann an dem Käfig angebracht sein, und zeichnet sich dadurch aus, dass der Querschnitt kleiner ist als der eines Wälzkörpers, jedoch groß genug, um mit Stützflächen im Bereich der Wälzkörperlaufbahnen beim Ausfall der Wälzkörper erfindungsgemäß zusammenzuwirken.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer Lenkwelle,
- Figur 2: einen Teil einer Lenkwelle gemäß Figur 1 in auseinander genommenem Zustand,
- Figur 3: eine Querschnittansicht einer Lenkwelle gemäß der vorangehenden Figuren,
- Figur 4: eine schematische perspektivische Teilansicht eines Querschnitts durch eine Lenkwelle gemäß Figur 1,
- Figur 4a: eine detaillierter Ausschnitt einer Querschnittsansicht der Lenkwelle gemäß den vorangehenden Figuren,
- Figur 5: die Lenkwelle gemäß Figur 4 in auseinander gezogenem Zustand,
- Figur 6: die Lenkwelle gemäß Figur 5 in weiter auseinander gezogenem Zustand,
- Figur 7: eine zweite Ausführungsform einer Lenkwelle in einer Darstellung ähnlich Figur 6,
- Figur 8: ein Sicherungselement der Lenkwelle gemäß Figur 8,
- Figur 9: eine Innenwelle einer Lenkwelle in einer dritten Ausführungsform,
- Figur 10: eine Innenwelle einer Lenkwelle in einer vierten Ausführungsform,
- Figur 11: eine schematische perspektivische Teilansicht einer Lenkwelle in einer fünften Ausführungsform,
- Figur 12: eine Querschnittsansicht der Lenksäule gemäß Figur 11,
- Figur 13: eine schematische perspektivische Teilansicht einer Lenkwelle in einer sechsten Ausführungsform,
- Figur 14: eine Querschnittsansicht der Lenksäule gemäß Figur 13.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

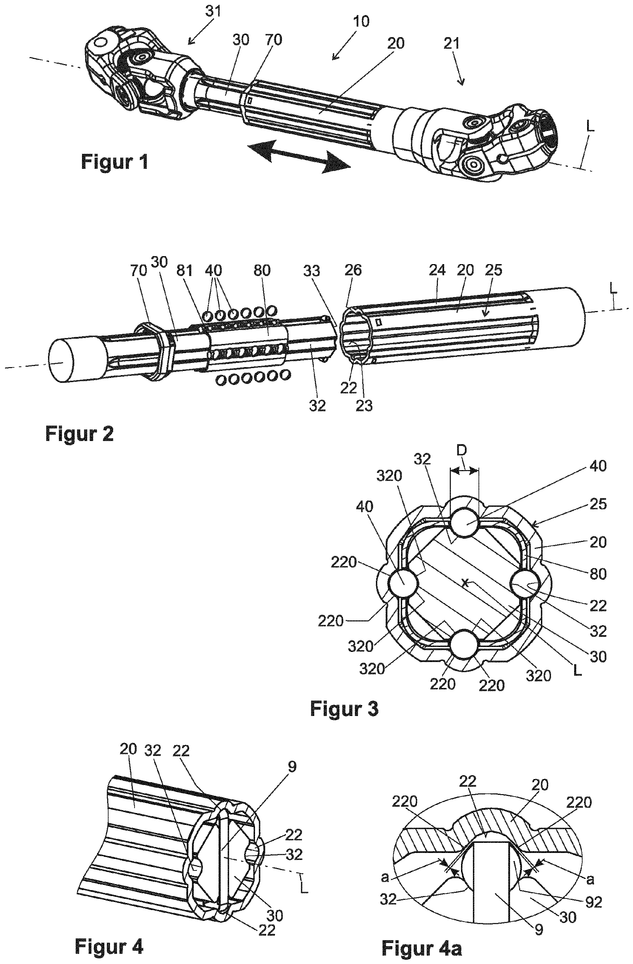

Figur 1 zeigt in perspektivischer Ansicht eine schematisch dargestellte Lenkwelle 10, die eine Außenwelle 20, auch äußere Hohlwelle genannt, und eine Innenwelle 30, auch innere Hohlwelle genannt, aufweist, die gegeneinander teleskopierbar sind in Richtung der Längsachse, d.h. in der mit dem Doppelpfeil angedeuteten Längsrichtung.

Die Außenwelle 20 weist an ihrem äußeren freien Ende, welches bezüglich der Innenwelle 30 in Längsrichtung abgewandt ist, eine Gabel 21 auf, welche einen Teil eines Universalgelenks bildet, mit dem die Lenkwelle 10 momentschlüssig mit dem Lenkstrang verbunden ist. Entsprechend weist die Innenwelle 30 an ihrem freien Ende, welches bezüglich der Außenwelle 20 in Längsrichtung abgewandt ist, eine Gabel 31 auf, welche einen Teil eines weiteren Universalgelenks bildet, mit dem die Lenkwelle 10 momentschlüssig mit dem Lenkstrang verbunden ist. Die Innenwelle 20 und die Außenwelle 30 sind bevorzugt aus gut kaltumformbarem Stahl gefertigt.

In die Öffnung der Außenwelle 20 ist ein in Richtung der Längsachse der Lenkwelle 10 wirksames Anschlagelement 70 eingesetzt. Die innere Welle 30 ist durch das Anschlagelement 70 verschiebbar hindurch geführt.

Figur 2 zeigt einen Teil der Lenkwelle 1 gemäß Figur 1 in einer Explosionsdarstellung, bei der die einzelnen Bestandteile in auseinander gezogenem Zustand dargestellt sind. Daraus geht hervor, dass die Außenwelle 20 in ihrem der Innenwelle 30 zugewandten Umfangsbereich, in den die Innenwelle 30 teleskopierend in Längsrichtung einschiebbar ist, profiliert ist. Die Profilierung der Außenwelle 20 umfasst Nuten 22, die sich in der inneren Manteloberfläche 23 in Längsrichtung erstrecken. Den Nuten 22 sind bezüglich der Wandung der Außenwelle 20 außen gegenüberliegend konvex vorstehende wulstartige Ausformungen 24 in der äußeren Manteloberfläche 25 ausgebildet. In der dargestellten Ausführung sind sowohl die Innenwelle 30 auch die Außenwelle 20 als Hohlprofile mit einer im Wesentlichen quadratischen Querschnitts-Grundform ausgebildet. Dabei sind insgesamt vier Nuten 22 gleichmäßig über den Umfang der Außenwelle 20 verteilt angeordnet, nämlich jeweils in der Mitte einer der Seiten des besagten quadratischen Querschnitts. Die Nuten 22 sind als Wälzkörperlaufbahnen, konkret als Kugellaufbahnen ausgebildet.

Der Endabschnitt der Innenwelle 30, welcher der Außenwelle 20 zugewandt und in diese teleskopartig einschiebbar ist, wie in Figur 1 dargestellt, ist ebenfalls profiliert. Die Profilierung umfasst Nuten 32, die sich von dem in die Außenwelle 20 einsteckbaren Ende in der äußeren Manteloberfläche 33 der Innenwelle 30 in Längsrichtung, d.h. in Richtung der Längsachse L erstrecken. Die Nuten 32 erstrecken sich über den Teilabschnitt der Innenwelle 30, der in die Außenwelle 20 in Längsrichtung einschiebbar ist.

An der Innenwelle 30 ist im Bereich ihrer Stirnseite 33, die der Stirnseite 26 der Außenwelle 20 zugewandt ist und sich im zusammengebauten Zustand innerhalb der Außenwelle 20 befindet, ein erfindungsgemäßes Sicherungselement 9 angeordnet, welches weiter unten näher erläutert wird.

Aus Figur 2 ist in der Zusammenschau mit der Querschnittsdarstellung in Figur 3 gut erkennbar, wie radial zwischen den Nuten 22 und 32 Wälzkörper, nämlich Kugeln 40, angeordnet sind. Jeweils eine Mehrzahl von Kugeln 40 ist in Längsrichtung hintereinander in den Nuten 22 und 32 angeordnet. Dabei werden sie in einem hülsenförmigen Wälzkörper- bzw. Kugelkäfig 80 frei drehbar, mit definiertem Abstand relativ zueinander gehalten.

Die in Figur 3 gezeigte Ausführung zeigt einen viereckigen, konkret einen quadratischen Grundquerschnitt der Wellen 20 und 30. Die Nuten 22 und 32 sind symmetrisch zur Längsachse L jeweils mittig in einer Seite des Quadrats angeordnet.

Die Kugeln 40 haben einen Durchmesser D und werden jeweils zwischen paarweise gegenüberliegenden Nuten 22 und 32 in Längsrichtung abrollbar aufgenommen. Mit ihrem kreisförmigen Querschnitt liegen die Kugeln 40 im Wesentlichen spielfrei an Kontaktflächen 220 und 320 in den Nuten 22 und 32 an. Dadurch bilden die Kugeln 40 Formschlusselemente, die einen in Umfangsrichtung wirksamen Formschluss zwischen den Nuten 22 und 32 erzeugen und welche dadurch die Innenwelle 30 und die Außenwelle 20 bezüglich einer Drehung um die Längsachse L formschlüssig miteinander verbinden.

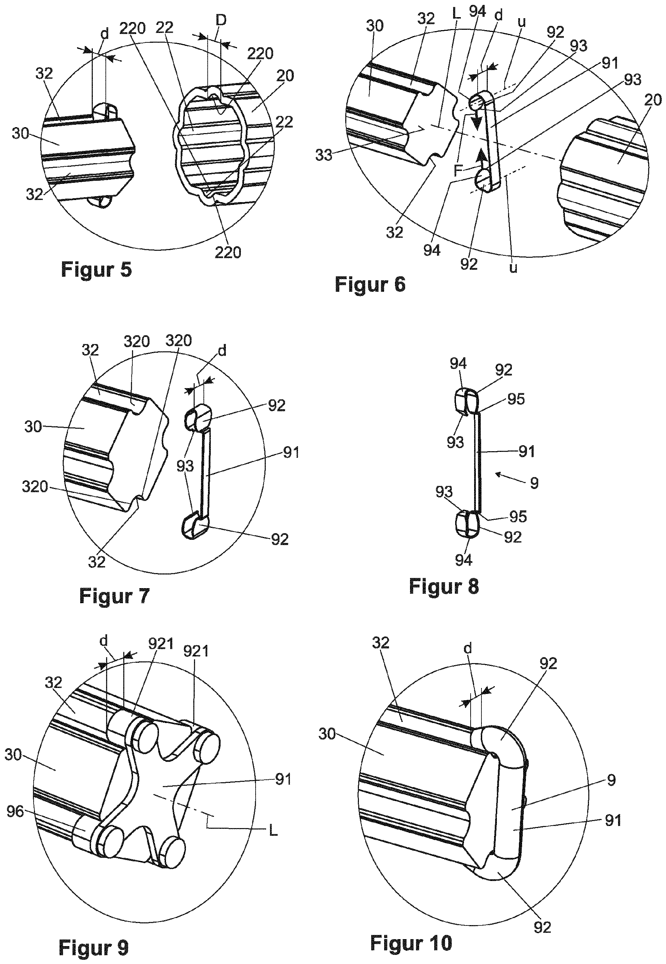

Die Ausgestaltung eines Sicherungselements 9 in einer ersten Ausführungsform ist in Figur 4 dargestellt. Darin ist die Außenwelle 20 im zusammengebauten Zustand gemäß Figur 1 im Querschnitt A-A aufgeschnitten und gibt den Blick auf die Stirnseite 33 der Innenwelle 30 frei. Das Sicherungselement 9 ist in Figur 4 in Einbaulage innerhalb der Lenksäule 10 gezeigt, in Figur 4a in einem detaillierten Ausschnitt eines Querschnittsansicht der Lenkwelle, in Figur 5 in einer perspektivischen Darstellung in dem auseinander gezogenen Zustand gemäß Figur 2, und in Figur 6 einzeln in von der Innenwelle 30 entfernten Zustand.

Das Sicherungselement 9 weist ein streifenförmiges, flaches Trägerteil 91 auf, welches sich quer zur Längsachse L an der Stirnseite 33 anliegend radial über diese erstreckt, also parallel zu einer Querschnittsfläche angeordnet ist. An den einander bezüglich der Längsachse L gegenüberliegenden Endbereichen sind an dem Trägerteil 91 Stützkörper 92 angebracht. Die Stützkörper 92 stehen von dem Trägerteil 91 in Längsrichtung gegen die Stirnseite 33 vor und sind im gezeigten Beispiel als Umbiegungen um Biegeachsen U geformt, die jeweils quer zur Längsachse L und zur radialen Erstreckung des Trägerteils 91 liegen, also in Umfangsrichtung. Dadurch hat das Sicherungselement 9 eine bügelförmige Grundform.

Die Stützkörper 92 haben freie Endbereiche 93, die bezogen auf die radiale Erstreckung des Trägerteils 91 um etwa 180° umgebogen sind, und zwar gegeneinander zeigend in Richtung der Federkraft F, die in Figur 6 mit den Pfeilen angedeutet ist und weiter unten erläutert wird.

Die einander radial gegenüberliegenden Endbereiche 93 greifen in Einbaulage gemäß Figur 4 und 5 in gegenüberliegende Nuten 32 der Innenwelle 30 ein. Dadurch, dass das Trägerelement 91 und/oder die Umbiegungen der Stützkörper 92 federelastisch ausgebildet sind, und der freie Abstand der Endbereiche 93 kleiner ist als der Durchmesser der Innenwelle 30 im Bereich der gegenüberliegenden Nuten 32, wird die Innenwelle 30 mit der Federkraft F zwischen den Stützkörpern 92 eingeklemmt, wobei die freien Endbereiche 93 mit ihren äußeren Kanten gegen die äußere Oberfläche der Innenwelle 30 angedrückt werden. Mit anderen Worten wird das Sicherungselement 9 stirnseitig auf der Innenwelle 30 festgeklemmt. Die Haltekraft der Klemmung kann dadurch erhöht werden, dass die Endbereiche 93 an ihren gegen die Oberfläche der Innenwelle 30 anliegenden Bereichen Fixiermittel aufweise, beispielsweise klingen- oder dornförmige scharfe Kanten, die sich in die Oberfläche der Innenwelle 30 eingraben und für einen sicheren Sitz des Fixierelements auf der Innenwelle 30 sorgen.

Das Sicherungselement 9 ist bevorzugt als einstückiges Blechformteil ausgebildet, und zwar bevorzugt als Stanz-Biegeteil aus Stahl- oder Federstahlblech. Dadurch sind die Stützkörper 92 in sich biegeelastisch, und federnd mit dem Trägerteil 91 verbunden.

In dem über den offenen Querschnitt der Nut 32 vorstehenden Stützbereich 94, der sich in die Nuten 22 der Außenwelle 20 erstreckt, hat das Stützkörper 92 eine Breite d, die kleiner ist als der Durchmesser D der Kugeln 40. Dadurch hat das Stützkörper 92 in Umfangsrichtung einen Abstand a zur Innenfläche der Nut 22, wie in Figur 4a eingezeichnet.

Der Endbereich 93 des Stützkörpers 92 kann bevorzugt so geformt sein, dass er in Umfangsrichtung formschlüssig von außen in den offenen Querschnitt einer Nut 32 der Innenwelle 30 eingesetzt ist, so dass das Sicherungselement 9 relativ zur Längsachse L drehfest auf der der Stirnseite 33 sitzt. Dadurch ist gewährleistet, dass der Abstand a zwischen dem Stützkörper 92 und der Außenwelle 20 eingehalten wird, so dass das Stützkörper 92 berührungsfrei angeordnet ist und im Normalbetrieb beim Verstellen der Innenwelle 30 in Längsrichtung keine unerwünschte Reibung zwischen dem Stützkörper 92 und der Außenwelle 20 auftritt.

Wird über ein nicht dargestelltes Lenkrad ein Lenkbefehl als Drehmoment um die Längsachse L in die Innenwelle 30 eingebracht, wird dieses im Normalbetrieb - bei intakten, in den Nuten 22 und 32 befindlichen Kugeln 40 - als Kraft in Umfangsrichtung von der Innenwelle 30 über die Kontaktflächen 320 auf die Kugeln 40 übertragen, und von diesen Kugeln 40 über die Kontaktflächen 220 auf die Außenwelle 20. Im Notfall, falls die Kugeln 40 zerstört oder aus den Nuten 32 und 22 entfernt sind, gelangen die Stützkörper 92 in Kontakt mit den Innenflächen der Nuten 32, die dann als Stützflächen im Sinne der Erfindung dienen, beispielsweise im Bereich der Kontaktflächen 220 und 320. Erst dann kommen die Stützkörper 92 gleichzeitig in Formschlusskontakt zwischen Innenwelle 30 und Außenwelle 20, und treten an die Stelle der im Notfall nicht mehr intakten Kugeln 40. Die Drehmomentübertragung erfolgt dann von der Innenwelle 30 über das oder die Stützkörper 92 und die Innenflächen der Nuten auf die Außenwelle 20.

Die beschriebenen vorteilhaften Wirkungen können ebenfalls mit der in Figuren 7 und 8 gezeigten Ausführung eines Sicherungselements 9 erreicht werden. Dieses ist ebenfalls wie die erste Ausführung als einstückiges Stanz-Biegeteil bevorzugt aus Stahl- oder Federstahlblech gefertigt. Im Unterschied zu der ersten Ausführung ist das Trägerteil 91 schmaler, an dem die Stützkörper 92 über zusätzliche Kröpfungen 95 angeformt sind. Dadurch sind die Stützkörper 92 in Längsrichtung vom Trägerteil 91 versetzt, und greifen doppelt, d.h. beidseitig in die Nut 32 ein.

Eine alternative Ausführung eines Sicherungselements 9 ist in Figur 9 gezeigt. Dieses hat ein plattenförmiges, flaches Trägerteil 91, welches kreuzförmig mit vier radial abstehenden Armen ausgebildet ist. An den Armen sind im Wesentlichen zylindrische Stützkörper 921 angebracht, deren Achsrichtungen parallel zur Längsachse L liegen. Das Trägerteil 91 wird wie bei den vorangehend beschriebenen Ausführungen parallel zur Stirnseite 33 der Innenwelle 30 angeordnet. Das Sicherungselement 9 kann ebenfalls wie beschrieben zwischen den Stützkörpern 921 auf der Innenwelle 30 festgeklemmt. Der Durchmesser d der Stützkörper 921 ist wiederum kleiner als der Durchmesser D der Kugeln 40, so dass die Stützkörper 921 bei intakten Kugeln 40 Abstand zu den Kontaktflächen 220 der Nuten 22 und damit Abstand in Umfangsrichtung zu Stützflächen der Außenwelle 20 haben.

Das Trägerteil 91 kann beispielsweise als Kunststoffteil ausgebildet werden, beispielsweise als Kunststoff-Spritzgussteil, oder alternativ als Blech-Stanzteil. Die Stützkörper 921, die bevorzugt aus einem widerstandsfähigen, belastbaren Werkstoff wie Stahl bestehen können, können an dem Trägerteil 91 angespritzt werden, oder stoff-, form- und/oder kraftschlüssig verbunden sein. In einer nicht dargestellten Ausführungsform kann es vorgesehen sein, dass das Trägerteil 91 mittels einer Schraube an der Innenwelle fixiert ist. Dazu ist eine Gewindebohrung in der Stirnseite 33 der Innenwelle 30 vorgesehen, in die die Schraube eingeschraubt ist. Alternativ kann es auch vorgesehen sein, dass das Trägerteil 91 mittels einer Punktschweißoperation an der Stirnseite 33 der Innenwelle 30 fixiert ist.

Eine weitere alternative Ausführung ist in Figur 10 gezeigt. Dabei handelt es sich um ein Biegeteil aus Profilmaterial, im gezeigten Beispiel aus einem Draht mit rundem Querschnitt, der einen Durchmesser d hat, der kleiner ist als der Durchmesser D der Kugeln 40. Die Stützkörper 92 werden wiederum durch einfache Umbiegungen gebildet, die stirnseitig in die Nuten 32 eingreifen.

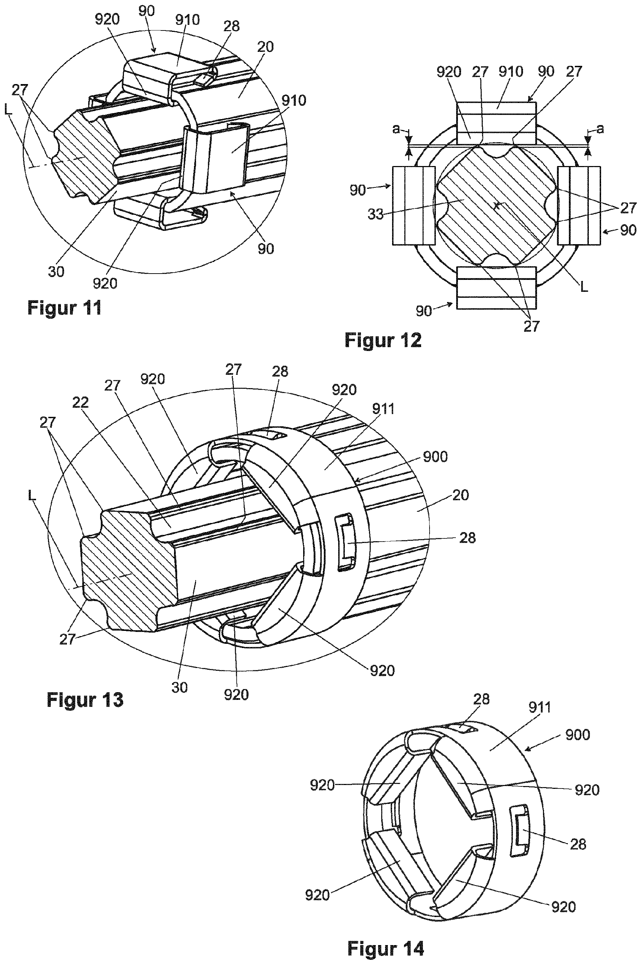

Eine alternative Ausführungsform der Erfindung ist in den Figuren 11 und 12 gezeigt. Diese Bauform hat ein Trägerteil 910 und einen Stützkörper 920. Von dem Trägerteil 910 und dem U-förmig, im Wesentlichen um 180° zurückgebogenen Abschnitt wird ein Halteschlitz begrenzt, mit dem das Sicherungselement 90 klammerartig auf die Wandung im stirnseitigen Bereich der Öffnung der Außenwelle 20 aufgesteckt ist, so dass das Trägerteil 910 sich außen auf der Außenwelle 20 erstreckt, und der den Stützkörper 920 bildende umgebogene Abschnitt in den Öffnungsquerschnitt der Außenwelle 20 eintaucht. Das Trägerteil 910 weist federelastische Halteabschnitte 28 auf, welche von außen federnd an der Außenwelle 20 anliegen und dadurch das Sicherungselement 90 festklammern.

Die Innenwelle 30 hat einen in der Grundform quadratischen Mehrkant-Querschnitt, mit in den Kantenbereichen verlaufenden Nuten 32. Entlang der Nuten 32 befinden sich Stützflächen 27. In dem dargestellten Betriebszustand haben die Stützflächen 27 den Abstand a zu den Stützkörpern 920, stellen also keine Verbindung zwischen der Innenwelle 30 und der Außenwelle 20 her.

Nur beim Ausfallen der Wälzkörper im Notfall kann eine Relativdrehung der Innenwelle 30 innerhalb der Außenwelle 20 auftreten. Dann schlagen die Stützflächen 27 mit einer Kraftkomponente in Umfangsrichtung an den oder die Stützkörper 920 an, so dass eine Drehmomentübertragung von der Innenwelle 30 über die Sicherungselemente 90 auf die Außenwelle 20 erfolgen kann.

Die in den Figuren 13 und 14 gezeigte Bauform funktioniert im Prinzip wie die vorangehend beschriebene Ausführung, wobei das Sicherungselement 900 insgesamt vier Stützkörper 920 aufweist, die an einem einzigen ringförmigen, zur Längsachse L koaxialen Trägerteil 911 angeordnet sind. Das Trägerteil 911 wird kappenartig auf dem offenen Ende der Außenwelle 20 gegen Verdrehung gesichert befestigt, wodurch die Montage vereinfacht wird.

Die Sicherungselemente 90 und 900 können bevorzugt als Stanz-Biegeteile aus Blech, bevorzugt aus Stahl- oder Federstahlblech gefertigt werden.

### Bezugszeichenliste

- 10: Lenkwelle
- 20: Außenwelle
- 21: Gabel
- 22: Nut
- 26: Stirnseite
- 220: Kontaktfläche
- 23: innere Manteloberfläche
- 24: Ausformungen
- 25: äußere Manteloberfläche
- 28: Stützflächen
- 30: Innenwelle
- 31: Gabel
- 32: Nut
- 320: Kontaktfläche
- 33: äußere Manteloberfläche
- 33: Stirnseite
- 40: Kugel
- 70: Anschlagelement
- 80: Wälzkörperkäfig
- 9, 90: Sicherungselement
- 91, 910, 911: Trägerteil
- 92, 920, 921: Stützkörper
- 94: Stützbereich
- 95: Kröpfung
- 27: Stützflächen
- a: Abstand
- D: Durchmesser
- d: Breite des Stützelements
- L: Längsachse

## Patentansprüche

1. Lenkwelle (10) für ein Kraftfahrzeug, welche eine als Hohlwelle ausgebildete Außenwelle (20) umfasst, in der eine Innenwelle (30) koaxial angeordnet ist, die relativ zur Außenwelle (20) in Richtung der Längsachse (L) der Lenkwelle (10) teleskopierbar und mit der Außenwelle (20) über mindestens einen Wälzkörper (40) drehmomentschlüssig verbunden ist, wobei der Wälzkörper (40) in Richtung der Längsachse (L) abrollbar ist und in Umfangsrichtung bezüglich einer Drehung um die Längsachse (L) formschlüssig zwischen Wälzkörperlaufbahnen (22, 32) an der Innenwelle (30) und an der Außenwelle (20) anliegt, wobei die Lenkwelle weiterhin ein Sicherungselement (9, 90, 900) umfasst, welches mindestens einen Stützkörper (92, 920, 921) aufweist, der zwischen an der Innenwelle (30) und an der Außenwelle (20) ausgebildeten Stützflächen (220, 28) angeordnet und in Umfangsrichtung formschlüssig abstützbar ist,
**dadurch gekennzeichnet,**
**dass** der Stützkörper (92, 920, 921) in Umfangsrichtung Abstand (a) zu den Stützflächen (220, 27) aufweist.

2. Lenkwelle nach Anspruch 1, **dadurch gekennzeichnet, dass** das Sicherungselement (9, 90, 900) mit der Innenwelle (30) oder der Außenwelle (20) fest verbunden ist.

3. Lenkwelle nach einem der vorhergehenden Ansprüche, **dadurch gekennzeichnet, dass** ein Stützkörper (92, 920, 921) zwischen den Wälzkörperlaufbahnen (22, 32) angeordnet ist, wobei die Stützflächen (220, 27) im Bereich der Wälzkörperlaufbahnen (22, 32) ausgebildet sind.

4. Lenkwelle nach einem der vorhergehenden Ansprüche, **dadurch gekennzeichnet, dass** der Stützkörper (92, 920, 921) in Umfangsrichtung zwischen den Abrollflächen der Wälzkörper (40) auf zumindest einer der Wälzkörperlaufbahnen eine kleinere Abmessung hat als ein Wälzkörper (40).

5. Lenkwelle nach einem der vorhergehenden Ansprüche, **dadurch gekennzeichnet, dass** das Sicherungselement (9, 90, 900) ein Trägerteil (91, 910, 911) aufweist, an dem mindestens das eine Stützkörper (92, 920, 921) angebracht ist.

6. Lenkwelle nach Anspruch 5, **dadurch gekennzeichnet, dass** das Trägerteil (91, 910, 911) sich flächenhaft in einer Querschnittsebene senkrecht zur Längsachse (L) erstreckt, und zumindest das eine Stützkörper (92, 920, 921) in Richtung der Längsachse (L) von dem Trägerteil (91, 910) absteht.

7. Lenkwelle nach Anspruch 5 oder 6, **dadurch gekennzeichnet, dass** zumindest zwei Stützkörper (92, 920, 921) bezüglich der Längsachse (L) spiegelsymmetrisch angeordnet sind.

8. Lenkwelle nach einem der vorhergehenden Ansprüche 5 bis 7, **dadurch gekennzeichnet, dass** zumindest zwei Stützkörper (92, 920, 921) von dem Trägerteil (91, 910, 911) gegeneinander federnd gegen die Innenwelle (30) oder die Außenwelle (20) angedrückt werden.

9. Lenkwelle nach einem der vorhergehenden Ansprüche, **dadurch gekennzeichnet, dass** das Sicherungselement (9, 90, 900) als einstückiges Blechformteil ausgebildet ist, wobei zumindest ein Stützkörper (92, 920, 921) als Umbiegung ausgebildet sind.

10. Lenkwelle nach Anspruch 5, **dadurch gekennzeichnet, dass** das Trägerteil (910, 911) sich in Richtung der Längsachse (L) erstreckt und der Stützkörper (920) an einem von dem Trägerteil (910, 911) klammerartig U-förmig umgebogenen Abschnitt gebildet wird, wobei ein freies Ende der Außenwelle (20) zwischen dem Trägerteil (910, 911) und dem Stützkörper (920) aufgenommen wird.

11. Lenkwelle nach einem der vorhergehenden Ansprüche, **dadurch gekennzeichnet, dass** der zumindest eine Wälzkörper (40) abrollbar in einem Käfig (80) gehaltert ist, der relativ zur Innenwelle (30) und zur Außenwelle (20) in Richtung der Längsachse (L) bewegbar ist, wobei ein Stützkörper (92, 920, 921) an dem Käfig (80) angebracht ist.

## Claims

1. Steering shaft (10) for a motor vehicle, which steering shaft (10) comprises an outer shaft (20) which is configured as a hollow shaft and in which an inner shaft (30) is arranged coaxially which can be telescoped relative to the outer shaft (20) in the direction of the longitudinal axis (L) of the steering shaft (10) and is connected in a torque-transmitting manner to the outer shaft (20) via at least one rolling body (40), it being possible for the rolling body (40) to roll in the direction of the longitudinal axis (L), and said rolling body (40) bearing in a positively locking manner in the circumferential direction with regard to a rotation about the longitudinal axis (L) between rolling body raceways (22, 32) on the inner shaft (30) and on the outer shaft (20), the steering shaft comprising, furthermore, a securing element (9, 90, 900) which has at least one supporting body (92, 920, 921) which is arranged between supporting faces (220, 28) which are configured on the inner shaft (30) and on the outer shaft (20), which at least one supporting body (92, 920, 921) can be supported in a positively locking manner in the circumferential direction,
**characterized**
**in that** the supporting body (92, 920, 921) is at a spacing (a) in the circumferential direction from the supporting faces (220, 27).

2. Steering shaft according to Claim 1, **characterized in that** the securing element (9, 90, 900) is connected fixedly to the inner shaft (30) or the outer shaft (20).

3. Steering shaft according to either of the preceding claims, **characterized in that** a supporting body (92, 920, 921) is arranged between the rolling body raceways (22, 32), the supporting faces (220, 27) being configured in the region of the rolling body raceways (22, 32).

4. Steering shaft according to one of the preceding claims, **characterized in that** the supporting body (92, 920, 921) has a smaller dimension in the circumferential direction between the rolling faces of the rolling bodies (40) on at least one of the rolling body raceways than a rolling body (40).

5. Steering shaft according to one of the preceding claims, **characterized in that** the securing element (9, 90, 900) has a carrier part (91, 910, 911), to which at least the one supporting body (92, 920, 921) is attached.

6. Steering shaft according to Claim 5, **characterized in that** the carrier part (91, 910, 911) extends in a laminar manner in a cross-sectional plane perpendicularly with respect to the longitudinal axis (L), and at least the one supporting body (92, 920, 921) projects from the carrier part (91, 910) in the direction of the longitudinal axis (L).

7. Steering shaft according to Claim 5 or 6, **characterized in that** at least two supporting bodies (92, 920, 921) are arranged in a mirror-symmetrical manner with regard to the longitudinal axis (L).

8. Steering shaft according to one of the preceding Claims 5 to 7, **characterized in that** at least two supporting bodies (92, 920, 921) are pressed by the carrier part (91, 910, 911) with respect to one another in a sprung manner against the inner shaft (30) or the outer shaft (20).

9. Steering shaft according to one of the preceding claims, **characterized in that** the securing element (9, 90, 900) is configured as a single-piece shaped sheet metal part, at least one supporting body (92, 920, 921) being configured as a bent portion.

10. Steering shaft according to Claim 5, **characterized in that** the carrier part (910, 911) extends in the direction of the longitudinal axis (L), and the supporting body (920) is formed on a section which is bent over in a clip-like U-shaped manner from the carrier part (910, 911), a free end of the outer shaft (20) being received between the carrier part (910, 911) and the supporting body (920).

11. Steering shaft according to one of the preceding claims, **characterized in that** the at least one rolling body (40) is secured such that it can roll in a cage (80) which can be moved relative to the inner shaft (30) and to the outer shaft (20) in the direction of the longitudinal axis (L), a supporting body (92, 920, 921) being attached to the cage (80).

## Revendications

1. Arbre de direction (10) pour un véhicule automobile, comprenant un arbre extérieur (20) réalisé sous forme d'arbre creux et dans lequel est disposé coaxialement un arbre intérieur (30) qui est télescopique par rapport à l'arbre extérieur (20) en direction de l'axe longitudinal (L) de l'arbre de direction (10) et qui est relié à l'arbre extérieur (20) par liaison de transmission de couple par l'intermédiaire d'au moins un corps de roulement (40), dans lequel le corps de roulement (40) peut rouler en direction de l'axe longitudinal (L) et s'appuie par complémentarité de forme entre des chemins de roulement de corps de roulement (22, 32) sur l'arbre intérieur (30) et sur l'arbre extérieur (20) dans la direction circonférentielle par rapport à une rotation autour de l'axe longitudinal (L), l'arbre de direction comprenant en outre un élément de fixation (9, 90, 900) présentant au moins un corps d'appui (92, 920, 921) qui est disposé entre des surfaces d'appui (220, 28) réalisées sur l'arbre intérieur (30) et sur l'arbre extérieur (20) et peut prendre appui par complémentarité de forme dans la direction circonférentielle,
**caractérisé en ce que**
le corps d'appui (92, 920, 921) présente un espacement (a) par rapport aux surfaces d'appui (220, 27) dans la direction circonférentielle.

2. Arbre de direction selon la revendication 1, **caractérisé en ce que** l'élément de fixation (9, 90, 900) est relié solidement à l'arbre intérieur (30) ou à l'arbre extérieur (20).

3. Arbre de direction selon l'une quelconque des revendications précédentes, **caractérisé en ce qu'**un corps d'appui (92, 920, 921) est disposé entre les chemins de roulement de corps de roulement (22, 32), les surfaces d'appui (220, 27) étant réalisées au niveau des chemins de roulement de corps de roulement (22, 32).

4. Arbre de direction selon l'une quelconque des revendications précédentes, **caractérisé en ce que** le corps d'appui (92, 920, 921) présente dans la direction circonférentielle entre les surfaces de roulement du corps de roulement (40), sur au moins l'un des chemins de roulement de corps de roulement, une dimension inférieure à un corps de roulement (40).

5. Arbre de direction selon l'une quelconque des revendications précédentes, **caractérisé en ce que** l'élément de fixation (9, 90, 900) présente une pièce de support (91, 910, 911) à laquelle est attaché au moins ledit un corps d'appui (92, 920, 921).

6. Arbre de direction selon la revendication 5, **caractérisé en ce que** la pièce de support (91, 910, 911) s'étend de manière plane dans un plan de section transversale perpendiculairement à l'axe longitudinal (L) et au moins ledit un corps d'appui (92, 920, 921) fait saillie depuis la pièce de support (91, 910) en direction de l'axe longitudinal (L).

7. Arbre de direction selon la revendication 5 ou 6, **caractérisé en ce qu'**au moins deux corps d'appui (92, 920, 921) sont disposés de manière symétrique par rapport à l'axe longitudinal (L).

8. Arbre de direction selon l'une quelconque des revendications 5 à 7, **caractérisé en ce qu'**au moins deux corps d'appui (92, 920, 921) de la pièce de support (910, 911), faisant ressort l'un par rapport à l'autre, sont pressés contre l'arbre intérieur (30) ou contre l'arbre extérieur (20).

9. Arbre de direction selon l'une quelconque des revendications précédentes, **caractérisé en ce que** l'élément de fixation (9, 90, 900) est réalisé sous forme de pièce façonnée en tôle intégrale, au moins un corps d'appui (92, 920, 921) étant réalisé sous forme de pliage.

10. Arbre de direction selon la revendication 5, **caractérisé en ce que** la pièce de support (910, 911) s'étend en direction de l'axe longitudinal (L) et le corps d'appui (920) est formé sur une partie repliée en forme de U, à la manière d'une bride, à partir de la pièce de support (910, 911), une extrémité libre de l'arbre extérieur (20) étant reçue entre la pièce de support (910, 911) et le corps d'appui (920).

11. Arbre de direction selon l'une quelconque des revendications précédentes, **caractérisé en ce que** ledit au moins un corps de roulement (40) est maintenu dans une cage (80) de manière à pouvoir rouler, ladite cage pouvant être déplacée par rapport à l'arbre intérieur (30) et à l'arbre extérieur (20) en direction de l'axe longitudinal (L), un corps d'appui (92, 920, 921) étant attaché à la cage (80).
